# EUROPÄISCHE PATENTSCHRIFT

(11) **EP 0 441 818 B1**
(45) Veröffentlichungstag und Bekanntmachung des Hinweises auf die Patenterteilung: **11.08.1993**
(21) Anmeldenummer: 89911991.1
(22) Anmeldetag: 20.10.1989
(51) Int. Cl.: B62D 3/12, B60G 7/02

(54) **Am Fahrzeugaufbau eines Kraftfahrzeugs lösbar befestigbare Baueinheit**
a modular unit for releasable connection to the structure of a motor vehicle
un module fixé de manière amovible à la structure d'un véhicule

(30) Priorität: 05.11.1988 DE 3837679
(43) Veröffentlichungstag der Anmeldung: 21.08.1991
(73) Patentinhaber: Volkswagen Aktiengesellschaft, 38436 Wolfsburg (DE)
(72) Erfinder: DAU, Wolfram, D-3180 Wolfsburg 1 (DE)
(74) Vertreter: Grützmann, Dieter
(86) Internationale Anmeldenummer: EP8901255
(87) Internationale Veröffentlichungsnummer: WO9005083

(56) Entgegenhaltungen:
- EP-A- 0 143 558
- FR-A- 2 201 196
- FR-A- 2 295 850
- FR-A- 2 507 988

## Beschreibung

Die Erfindung betrifft eine am Fahrzeugaufbau eines Kraftfahrzeugs lösbar befestigbare Baueinheit, die in sich die Funktionen eines u. a. der schwenkbaren Anlenkung von - vorzugsweise dreieckförmigen - Radführungslenkern dienenden Hilfsrahmens (Fahrschemels) sowie eines Gehäuses einer Zahnstangenlenkung mit sich längs des Gehäuses erstreckenden oberere und/oder unteren gurtförmigen Versteifungen vereinigt, wie sie beispielsweise aus der FR-A-2 295 850 bekannt ist.

Im modernen Personenkraftwagenbau werden Hilfsrahmen bzw. Fahrschemel zunehmend eingesetzt, weil sie u. a. größere konstruktive Freizügigkeit bezüglich der aufbauseitigen Anlenkung der radführenden Radführungslenker ermöglichen, verbesserte Möglichkeiten zur Geräuschisolierung des Fahrgast-Innenraums eröffnen und darüber hinaus Möglichkeiten zur Vergrößerung des Automatisierungsgrades bei der Endmontage des Fahrzeuges bieten.

Von solchen Hilfsrahmen wird im Hinblick auf die Abstützung der von den Fahrzeugrädern eingeleiteten Fahrkräfte eine hohe Quersteifigkeit, im Hinblick auf einen eventuellen Frontalzusammenstoß eine gezielt weiche Anbindung an den Längsträgern des Fahrzeug-Chassis und darüber hinaus eine möglichst hohe Biegesteifigkeit verlangt, insbesondere dann, wenn der Hilfsrahmen zusätzlich auch zur Abstützung oder aber zur Teilabstützung von Aggregaten (Motor; Getriebe, Differential) herangezogen wird.

Im modernen Personenkraftwagenbau wird unter äußerster Nutzung des vorhandenen Bauraums eine möglichst kompakte Bauweise angestrebt, was häufig zu vergleichsweise komplizierten Bauformen u. a. auch des Hilfsrahmens führt, weil auf benachbarte andere Bauteile Rücksicht genommen werden muß. Verstärkt treten solche Probleme bei Fahrzeugen der Unterklasse und der unteren Mittelklasse auf.

Üblicherweise werden die Hilfsrahmen bzw. Fahrschemel als ein- oder zweischalige Blechrahmen aus Tiefziehblechen hergestellt. Bei komplizierter gestalteten Hilfsrahmen ergeben sich somit häufig Fertigungsschwierigkeiten aufgrund großer Ziehtiefen o. ä. sowie Steifigkeits- und Gewichtsprobleme.

Aus der FR-A-2 295 850 ist nun bereits eine vergleichsweise kompakte Hilfsrahmenkonstruktion bekannt, in welcher die Funktionen des Gehäuses einer- Zahnstangenlenkung sowie die eines Fahrschemels, an dem ein dreieckförmiger Radführungslenker mit einem seiner beiden Lenkerlager angelenkt ist, vereinigt sind.

Bei dieser bekannten Baueinheit sind an den beiden Enden des mit gurtförmigen Versteifungen ausgestatteten kastenförmigen Lenkungsgehäuses mehrteilige Lagerkonsolen angeschraubt, die jeweils einerseits einen Lagerbock zur schwenkbaren Anlenkung der Radführungslenker bilden und andererseits jeweils einen oberen plattenförmigen Konsolenbereich zum Anschrauben am Fahrzeugaufbau aufweisen.

Vor diesem Hintergrund liegt der Erfindung die Aufgabe zugrunde, eine im Vergleich zum Stand der Technik verbesserte raum- und gewichtssparende und trotzdem ausreichend steife Hilfsrahmenkonstruktion bzw. Baueinheit der im Oberbegriff des Patentanspruchs 1 genannten Art zu schaffen.

Diese Aufgabe wird erfindungsgemäß durch die Merkmale des Patentanspruchs 1 gelöst.

Erfindungsgemäß wird also das Leichtmetall-Gußgehäuse einer Kfz-Zahnstangenlenkung als Grundlage für den Hilfsrahmen ausgenutzt, indem das eigentliche Zahnstangen-Gußgehäuse mit geeigneten rippen-, steg- und/oder gurtartigen Längs- und Querversteifungen versehen und mit konsolenartigen seitlichen Angüssen ausgestattet wird, die einenteils zur Befestigung der so entstandenen einstückigen Zahnstangenlenkungs-Hilfsrahmen-Baueinheit aus Leichtmetallguß am Fahrzeugaufbau und anderenteils zur schwenkbaren Anlenkung von vorzugsweise dreieckförmigen Quer- oder Schräglenkern an dieser Baueinheit dienen.

Vorteilhafte Ausgestaltungen und Weiterbildungen der Erfindung sind in den Unteransprüchen angegeben.

Die erfindungsgemäße Hilfsrahmen/Zahnstangengußgehäuse-Baueinheit zeichnet sich durch Steifigkeit, vergleichsweise geringes Gewicht und vergleichsweise geringen Raumbedarf aus und besitzt den wesentlichen Vorteil, daß sie den gegebenen, mitunter sehr komplizierten Raumverhältnissen vergleichsweise einfach angepaßt werden kann.

Für Großserienfahrzeuge wird man anstreben, diese Guß-Baueinheit als Aluminium- oder Magnesium-Druckguß (bzw. Legierungen daraus) auszuführen. Es ist natürlich auch möglich, sie als Kokillenguß auszubilden oder im Wachsausschmelzverfahren herzustellen

Anhand eines in der Zeichnung dargestellten Ausführungsbeispieles wird die Erfindung nachstehend näher erläutert.

In der Zeichnung zeigen in prinzipienhafter Darstellung
- Fig. 1: eine in Fahrzeuglängsrichtung gesehene Hilfsrahmen/Zahnstangenlenkungs-Baueinheit aus Leichtmetallguß,
- Fig. 2: die entsprechende Baueinheit in einer Draufsicht und
- Fig. 3: einen Querschnitt der Baueinheit entlang der Schnittführung III.

Die Zeichnung zeigt die Aufhängung lenkbarer Räder eines Kraftfahrzeuges, wobei nur die für das Verständnis der Erfindung notwendigen Einzelheiten der Radaufhängung dargestellt sind.

Die über Spurstangen 16 einer Zahnstangenlenkung lenkbaren Räder 4 des Fahrzeuges sind jeweils über einen unteren dreieckförmigen Querlenker 3 schwenkbar an einem Hilfsrahmen angelenkt, der seinerseits lösbar am nur angedeuteten Fahrzeugaufbau 2 angeschraubt ist. Weitere notwendige Radführungsglieder, sei es ein oberer Querlenker oder ein radführendes Federbein, sowie der Radträger (Achsschenkel) selbst sind wegen der besseren Übersicht nicht weiter dargestellt.

Der Hilfsrahmen und die Zahnstangenlenkung bzw. das Gehäuse 5 der Zahnstangenlenkung sind zu einer integrierten einstückigen Baueinheit 1 aus Leichtmetallguß ausgebildet, vorzugsweise aus Aluminium- oder Magnesium-Druckguß. Das Leichtmetall-Gußgehäuse ist zu diesem Zweck mit entlang seinem Umfang und seiner Länge angegossenen rippen-, steg- und/oder gurtartigen Versteifungen 10 - 13 sowie mit seitlichen konsolenartigen Angüssen 7 bis 9 versehen, wobei in den seitlichen konsolenartigen Angüssen einerseits Lager 22 zur lösbaren Befestigung dieser Baueinheit am Fahrzeugaufbau 2 und andererseits Lager 20, 21 zur verschwenkbaren Anlenkung des Querlenkers 3 an der Baueinheit vorgesehen sind; dabei ist das eine Lager 20 in bekannter Weise so ausgebildet, daß es gleichzeitig sowohl zur Befestigung der Baueinheit am Fahrzeugaufbau 2 als auch zur Anlenkung des Querlenkers 3 dient.

Im Ausführungsbeispiel sind an den beiden Enden des die Zahnstange 23 aufnehmenden, quer zur Fahrzeuglängsrichtung ausgerichteten Gehäuseteils 5, welches das eigentliche Zahnstangenlenkungs-Gehäuse darstellt und in üblicher Weise einen im wesentlichen kreisringförmigen Querschnitt besitzt, je zwei in der Draufsicht etwa Y-förmig schräg nach außen auseinanderlaufende konsolenartige Angüsse 7, 8 mit an ihren Enden angeordneten Lagern 20, 21 angeformt, welche primär der schwenkbaren Anlenkung des Querlenkers 3 dienen und im Ausführungsbeispiel etwa in der gleichen Horizontalebene liegen, was im Einzelfall jedoch von der angestrebten Kinematik der Radführung abhängt. Wie bereits zuvor erwähnt dient eins der beiden Lager, nämlich Lager 20 gleichzeitig auch zur Befestigung der Guß-Baueinheit am Fahrzeugaufbau 2. Je ein weiterer seitlicher konsolenartiger Anguß 9 ist oberhalb der fiktiv durch die beiden ersten konsolenartigen Angüsse 7, 8 gelegten Ebene vorgesehen. Dieser trägt endseitig ein Lager 22, welches zur lösbaren Befestigung der Baueinheit am Fahrzeugaufbau 2 dient.

In den Fällen, in denen in weit verbreiteter Weise nur eine der beiden Lagerstellen des dreieckförmigen Quer- bzw. Schräglenkers am Hilfsrahmen bzw. an der Baueinheit 1 angelenkt wird, die andere Lagerstelle des Radführungslenkers dagegen unmittelbar am Fahrzeugaufbau 2 angreift, kann an der integrierten Guß-Baueinheit 1 natürlich der entsprechende seitliche konsolenartige Anguß entfallen.

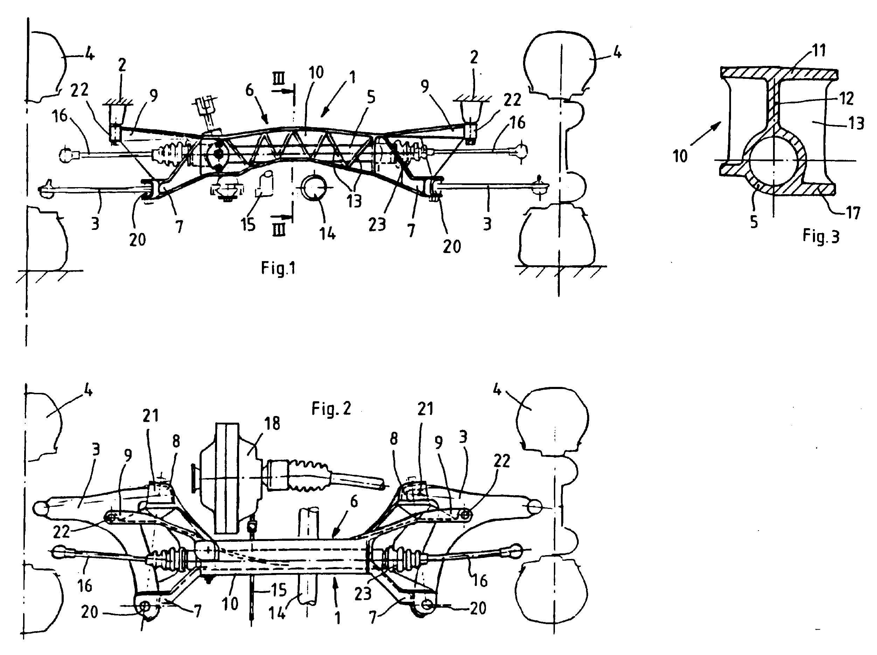

Im Ausführungsbeispiel ist eine oberhalb des die Zahnstange 23 aufnehmenden Gehäuseteils 5 längsverlaufende T-trägerförmige Versteifung 10 mit etwa horizontalem Obergurt 11 und etwa vertikalem Steg 12 (Fig. 3) vorgesehen, die in den seitlich abgespreizten konsolenartigen Angüssen 7, 8 einmündet und deren vertikaler Steg 12 zumindest im mittleren Bereich etwa symmetrisch in den kreisringförmigen Querschnitt des Gehäuseteils 5 einläuft. Beiderseits der Versteifung 10 sind abwechselnd gegenläufig schräggestellte Querrippen 13 angeordnet, die sich jeweils vom Obergurt 11 bis zum unteren Bereich des Gehäuseteils 5 erstrecken, im gezeigten Ausführungsbeispiel bis zu einem entsprechenden Untergurt 17. Es versteht sich, daß natürlich auch andere Versteifungen, z. B. U-trägerförmige Versteifungen o. ä. sinngemäß zur Anwendung kommen können.

Im Mittelteil 6 der Baueinheit 1, d. h. im Bereich des die Zahnstange aufnehmenden Gehäuseteils 5 ist die Versteifung 10 - in Fahrzeuglängsrichtung gesehen - brückenartig gewölbt ausgebildet, d. h. so, daß sie von einem mittigen Bogenscheitelpunkt aus zu den seitlich abgespreizten konsolenartigen Angüssen 7, 8 hin leicht abfallend gebogen verläuft und dort in den konsolenartigen Angüssen 7, 8 endet. Diese brückenartige Wölbung ist von Vorteil, wenn auf der Baueinheit 1 auch Aggregateteile, z. B. ein Differential 18 abgestützt werden müssen, und erleichtert es darüber hinaus, z. B. das Rohr 14 einer Abgasanlage oder das Schaltgestänge 15 eines Wechselgetriebes unter der Baueinheit 1 hindurchzuführen.

## Patentansprüche

1. Am Fahrzeugaufbau (2) eines Kraftfahrzeuges lösbar befestigbare Baueinheit (1), die in sich die Funktionen eines u. a. der schwenkbaren Anlenkung von - vorzugsweise dreieckförmigen - Radführungslenkern (3) dienenden Hilfsrahmens (Fahrschemels) sowie eines Gehäuses einer Zahnstangenlenkung mit sich längs des Gehäuses erstreckenden oberen und/oder unteren gurtförmigen Versteifungen (11, 17) vereinigt,
dadurch gekennzeichnet, daß die Baueinheit (1) als einstückige Leichtmetallguß-Baueinheit ausgebildet ist, daß an beiden Enden eines die Zahnstange (23) aufnehmenden Gehäuseteils (5) mit im wesentlichen kreisringförmigem Querschnitt je zwei in der Draufsicht etwa Y-förmig schräg nach außen auseinanderlaufende konsolenartige Angüsse (7, 8) mit endseitig angeordneten Lagern (20, 21) zur Befestigung der Baueinheit (1) am Fahrzeugaufbau (2) und/oder zur Anlenkung der schwenkbaren Radführungslenker (3) vorgesehen sind, und daß neben den sich längs erstreckenden oberen und/oder unteren gurtartigen Versteifungen (11, 17) entlang dem Umfang des Gehäuseteils (5) weitere angegossene rippen- und stegartige Versteifungen (10, 12, 13) vorgesehen sind.

2. Baueinheit nach Anspruch 1,
gekennzeichnet durch je einen weiteren seitlichen konsolenartigen Anguß (9), der oberhalb einer fiktiv durch die beiden anderen konsolenartigen Angüsse (7, 8) gelegten Ebene liegt und ein Lager (22) zur Befestigung am Fahrzeugaufbau (2) aufweist.

3. Baueinheit nach Anspruch 1 oder 2,
gekennzeichnet durch eine im Querschnitt T-, U- oder Doppel-T-trägerförmige Versteifung (10), die sich entlang des die Zahnstange (23) aufnehmenden Gehäuseteils (5) erstreckt und in den seitlich abgespreizten konsolenartigen Angüssen (7, 8) endet.

4. Baueinheit nach Anspruch 3,
gekennzeichnet durch vorzugsweise beiderseits der Versteifung (10) angeordnete, abwechselnd gegenläufig schräggestellte Querrippen (13).

5. Baueinheit nach Anspruch 3 oder 4,
dadurch gekennzeichnet, daß die Versteifung (10) im Bereich des die Zahnstange (23) aufnehmenden Gehäuseteils (5) - in Fahrzeuglängsrichtung gesehen - von einem mittigen Bogenscheitelpunkt aus zu den seitlich abgespreizten konsolenartigen Angüssen (7, 8) hin abfallend leicht abgebogen verläuft und in den konsolenartigen Angüssen (7, 8) endet.

## Claims

1. A component (1) which is releasably attached to the vehicle bodywork (2) of a motor vehicle and which combines the functions of among other things the pivotable linkage of an auxiliary frame (subframe), which serves as wheel guiding transverse swinging arms (3) and is preferably triangular in shape, as well as of a housing of a rack and pinion steering having upper and/or lower flange-shaped reinforcing parts (11, 17) which extend longitudinally along the housing, characterised in that the component (1) is formed as a one-piece component cast in light metal, furthermore that in each case two bracket-type castings (7, 8) having bearings (20, 21) disposed at the end for the purpose of attaching the component (1) to the vehicle bodywork (2) and/or for articulating the pivotable wheel-guiding transverse swinging arms (3), are provided at both ends of a housing part (5) which accommodates the rack and pinion unit (23) and which has a substantially circular cross section and the castings (7, 8), when seen from above, diverge diagonally outwards approximately in a Y-shape and furthermore that in addition to the upper and/or lower flange-type reinforcing parts (11, 17) which extend longitudinally along the periphery of the housing part (5), further rib-shaped and cross-piece type reinforcing parts (10, 12, 13) are provided.

2. A component according to claim 1, characterised by a further lateral bracket-type casting (9) which lies in each case above an imaginary plane lying through the two other bracket-type castings (7, 8) and comprises a bearing (22) for the purpose of attaching to the motor vehicle bodywork (2).

3. A component according to claim 1 or 2, characterised by a reinforcing part (10) which comprises a T-shaped, U-shaped or double-T-bearer-shaped cross section and which extends along the housing part (5) accomodating the rack and pinion unit (23) and which terminates in the laterally outwardly diverging bracket-type castings (7, 8).

4. A component according to claim 3, characterised by transverse ribs (13) which are disposed preferably on both sides of the reinforcing part (10) and which are arranged alternatively diagonally opposed.

5. A component according to claim 3 or 4, characterised in that the reinforcing part (10) in the region of the housing part (5) accommodating the rack and pinion unit (23) extends, as seen from the longitudinal direction of the motor vehicle, slightly curved downwardly from a central top point of an arch towards the laterally outwardly diverging bracket-type castings (7, 8) and terminates in the bracket-type castings (7, 8).

## Revendications

1. Module (1) pouvant être fixé de façon amovible sur la carrosserie (2) d'un véhicule, réunissant les fonctions d'un cadre auxiliaire (faux-châssis) permettant, entre autres choses, l'articulation oscillante de bras de suspension (3) de roues - bras triangulaires de préférence - et d'un carter de direction à crémaillère présentant des renforts supérieurs et/ou inférieurs en forme de ceintures s'étendant le long du carter,
caractérisé en ce que le module (1) est réalisé sous forme d'un module monobloc (1) en métal léger moulé, en ce qu'aux deux extrémités d'une partie (5) de carter, qui reçoit la crémaillère (23), ayant une section transversale essentiellement annulaire circulaire, sont prévus deux appendices (7, 8) en forme de consoles bifurquant obliquement vers l'extérieur, approximativement en forme d'un Y, vu de dessus, comprenant des paliers (20, 21) situés à leurs extrémités, permettant la fixation du module (1) sur la carrosserie (2) du véhicule et/ou permettant l'articulation oscillante d'un bras de suspension (3) de roue, et en ce que d'autres renforts (10, 12, 13) en forme de nervures et d'arêtes, moulés sur la pièce, sont prévus à côté des renforts supérieurs et/ou inférieurs (11, 17) en forme de ceinture, s'étendant longitudinalement le long de la périphérie de la partie (5) de carter.

2. Module selon la revendication 1, caractérisé par un appendice latéral supplémentaire (9) en forme de console respectivement situé au-dessus d'un plan fictif passant par les deux autres appendices (7, 8) en forme de consoles, et présentant un palier (22) permettant sa fixation sur la carrosserie (2) du véhicule.

3. Module selon la revendication 1 ou 2, caractérisé par un renfort (10) en forme de poutre à section en T, en U ou en double T, qui s'étend le long de la partie (5) de carter recevant la crémaillère (23), et qui se termine dans les appendices (7, 8) en forme de consoles, s'écartant latéralement.

4. Module selon la revendication 3, caractérisé par des nervures transversales (13) de préférence disposées des deux côtés du renfort (10), inclinées en sens opposés alternativement.

5. Module selon la revendication 3 ou 4, caractérisé en ce qu'au niveau de la partie (5) de carter recevant la crémaillère (23), le renfort (10) - vu dans le sens longitudinal du véhicule - s'étend depuis un point apical central d'arc, selon une courbe légèrement descendante, jusqu'aux appendices (7, 8) en forme de consoles s'écartant latéralement, et se termine dans ces appendices (7, 8) en forme de consoles.
